# EUROPEAN PATENT APPLICATION

(11) **EP 1 587 312 A2**
(43) Date of publication of application: **19.10.2005**
(21) Application number: 04255184.6
(22) Date of filing: 27.08.2004
(51) Int. Cl.: H04N 5/44

(54) **Image output device, and information processing device, and computer product**

(30) Priority: 15.04.2004 JP 2004120928
(71) Applicant: FUJITSU LIMITED, Kawasaki-shi, Kanagawa 211-8588 (JP)
(72) Inventor: Isobe, Yasuhiko, Fujitsu Limited, Kawasaki-shi, Kanagawa 211-8588 (JP); Hirosue, Yoji, Fujitsu Limited, Kawasaki-shi, Kanagawa 211-8588 (JP); Negishi, Hisashi, Fujitsu Limited, Kawasaki-shi, Kanagawa 211-8588 (JP); Kogure, Takashi, Fujitsu Limited, Kawasaki-shi, Kanagawa 211-8588 (JP); Kawano, Hiroharu, Fujitsu Limited, Kawasaki-shi, Kanagawa 211-8588 (JP)
(74) Representative: Stebbing, Timothy Charles

(57) **Abstract**

An image output device (10) includes a condition monitoring unit (122a) that monitors a condition of an output destination device (14, 16); a power source unit (126, 151) that is not influenced by the conditions of the output destination device (14, 16); and an image output unit (11) that outputs images. Depending upon the conditions of the output destination device (14, 16), monitored by the condition monitoring unit (122a), an image processing unit (122b) determines the images to be output from an image output unit (115).

## Description

The present invention relates to an image output device, an information processing device and a computer product that monitor power and display and other conditions concerning a personal computer or a monitor, thereby speeding up the displaying of TV images.

A conventional image processing device is equipped with a tuner unit that receives and selects broadcast signals. The conventional image processing device includes a TV tuner that converts broadcast signals selected by a tuner unit into TV image signals, and a computer that switches between TV image signals and PC image signals that are recorded and replayed as TV image signals, and then outputs the image signals to a monitor. In such an image processing device, the TV tuner starts after the PC starts, and therefore, it takes a long time to output TV image signals. There are conventional technologies concerning a TV tuner that outputs TV image signals to a monitor quickly even if the PC has not started yet. For example, Japanese Patent Application Laid-Open Publication No.2003-67073 discloses a technology whereby a changeover switch is used to output TV image signals directly to a monitor, and to record or replay TV image signals via a PC, thereby outputting TV images speedily.

However, it has not been possible to monitor power and display and other conditions concerning a PC or a monitor, to display TV images speedily.

It is therefore desirable to solve the problems in the conventional technology.

An image output device according to an aspect of the present invention includes an event (condition) monitoring unit that monitors an event occurring in (condition of) an output destination device; a power source unit that is not influenced by the events in the output destination device; and an image output unit (changeover switch) that outputs images.

An information processing device according to another aspect of the present invention outputs images to a displaying unit and includes a controlling unit that carries out a main (overall) control over the information processing device, and outputs information images (on screen displays); a power source unit that is not influenced by an event occurring in (a condition or status of) at least one of the controlling unit and a displaying unit; at least one image receiving unit that receives images; an event (condition) monitoring unit that monitors the events in (conditions of) at least one of the controlling unit and the displaying unit; an image output unit that outputs the images; and an image processing unit that performs at least one function from among switching between the information images and the images, and composing the information images and the images, based on the events monitored.

An image output (processing) method according to still another aspect of the present invention includes monitoring events occurring in (conditions of) at least one of an information processing device and a display device; and an image processing that includes performing at least one function from among switching between information images (on screen displays) from the information processing device and images from a receiving device, and superimposing the information images from the information processing device and the images from a receiving device, based on the events monitored.

The computer program according to still another aspect of the present invention causes a computer to execute the above method according to the present invention.

The computer-readable recording medium according to still another aspect of the present invention stores therein the above computer program according to the present invention.

Other features and advantages of the present invention are specifically set forth in or will become apparent from the following detailed description of the invention when read in conjunction with the accompanying drawings, in which:
Fig. 1 is a schematic diagram of an external view of a main body of an image processing device according to a first embodiment;
Fig. 2 is a functional block diagram of the image processing device;
Fig. 3 illustrates conditions related to a power source and images of the image processing device;
Figs. 4A to 4E illustrate control conditions for the power source and the images of the image processing device;
Fig. 5 is a flowchart of an image display control procedure;
Fig. 6 is a flowchart of the image display control procedure for the instance when a PC power button has been pressed down;
Fig. 7 is a flowchart of the image display control procedure for the instance when a TV tuner power button has been pressed down;
Fig. 8 is a flowchart of the image display control procedure for the instance when a TV/PC changeover button has been pressed down;
Fig. 9 is a flowchart of the image display control procedure for the instance when the input device and the timer start the PC;
Fig. 10 is a flowchart of the image display control procedure for the instance when the input device and the timer shift the PC to power save mode;
Fig. 11 is a functional block diagram of an image processing device according to a second embodiment;
Fig. 12 is a functional block diagram of a 3DY/C shown in Fig. 11; and
Fig. 13 is a functional block diagram of an image processing device according to a third embodiment.

Exemplary embodiments of an image output device and an information processing device, and a computer product according to the present invention will be explained in detail below, with reference to the accompanying drawings.

A first embodiment is explained with reference to switching between the display of TV image signals received by a tuner unit and recorded images.

A second embodiment is explained with reference to displaying TV image signals received by a first tuner unit, and simultaneously recording TV image signals received by a second tuner unit.

A third embodiment is explained with reference to composing (editing) of TV image signals received by a tuner unit and of recorded PC image signals.

A first embodiment is explained hereinafter with reference to switching between the display of TV image signals received by a tuner unit and recorded images. The first embodiment is explained in the order of (1) outline and main features of an image processing device, (2) structure of an image processing device, (3) condition/control concerning power/images of an image processing device, and (4) image display control procedures of an image processing device.

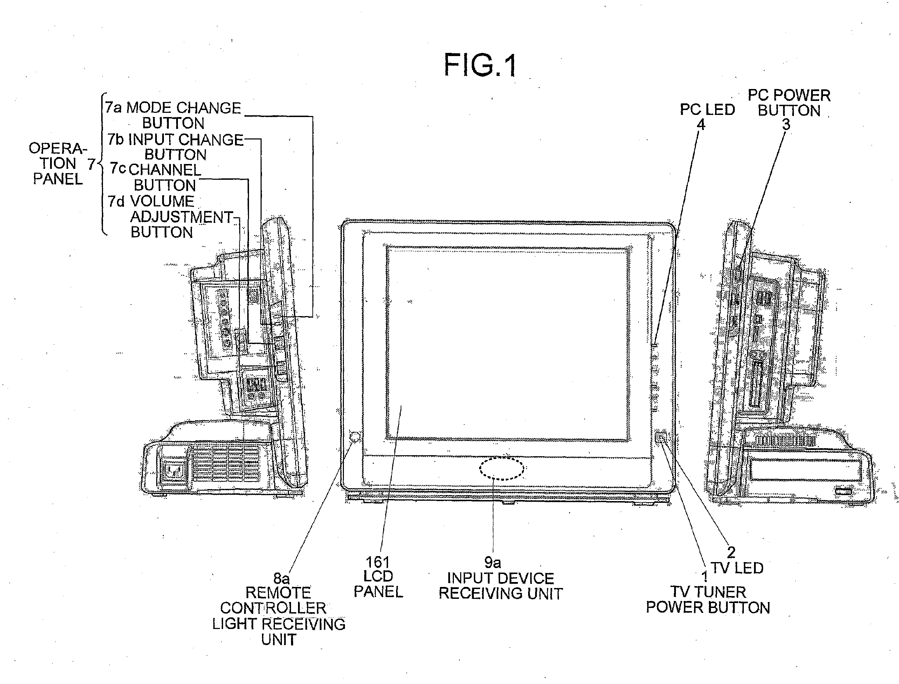

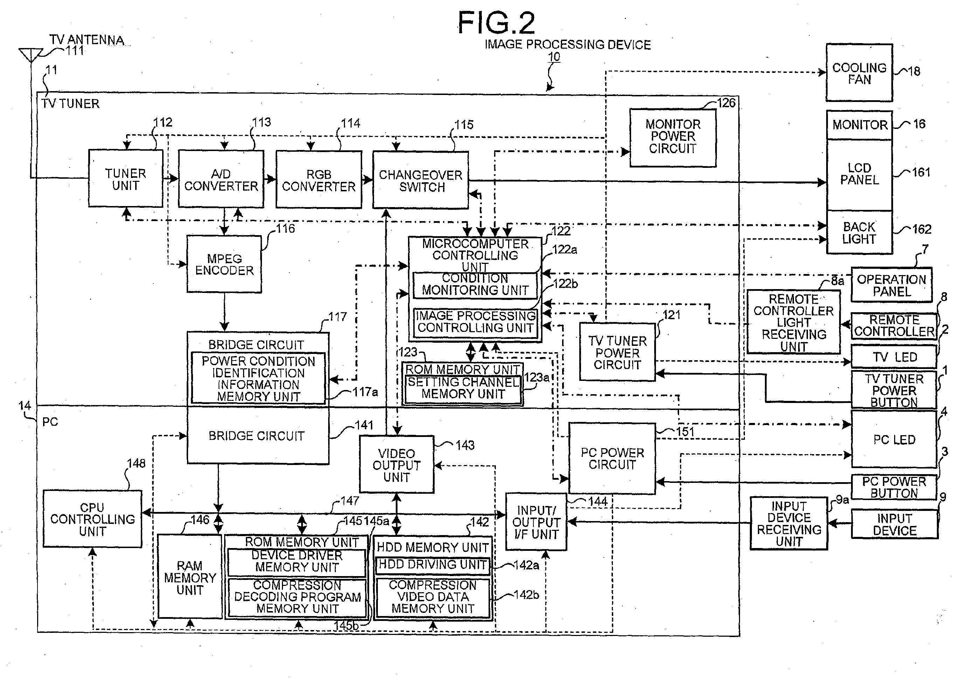

The outline and the main features of an image processing device are explained with reference to Fig. 1 and Fig. 2. Fig. 1 is a schematic diagram of an external view of the main body of an image processing device 10 according to the first embodiment. Fig. 2 is a functional block diagram of the image processing device 10.

As shown in Fig. 2, a condition monitoring unit 122a monitors the power and display and other conditions concerning a PC 14 and a monitor 16. A TV tuner 11 outputs images, without any influence by the power and display and other conditions concerning the PC 14 and the monitor 16. Therefore, it is possible to display TV images speedily by monitoring the power and display and other conditions concerning the PC 14 and the monitor 16.

The structure of the image processing device 10 according to the first embodiment is explained next. As shown in Fig. 2, the image processing device 10 has a TV tuner power button 1, a TV LED 2, a PC power button 3, a PC LED 4, an operation panel 7, a remote controller 8, a remote controller light receiving unit 8a, an input device 9, an input device receiving unit 9a, a TV tuner 11, a PC 14, a monitor 16, and a cooling fan 18. The structure of the image processing device is explained in the order of structure of the power button, the operation panel, the monitor and the like, structure of the TV tuner, and structure of the PC.

As shown in Fig. 1, the TV tuner power button 1, the TV LED 2, the PC power button 3, the PC LED 4, the remote controller light receiving unit 8a, and the input device receiving unit 9a are provided on the monitor 16. The TV tuner power button 1 turns ON/OFF the TV tuner power source. The TV LED 2 displays the ON/OFF condition of the TV tuner. Specifically, the TV LED is lit when the TV tuner power button is ON, while the TV LED goes off when the TV tuner power button is OFF.

The PC power button 3 turns ON/OFF the PC 14. The PC LED 4 displays power conditions including stop, waiting, ON/OFF and the like of the PC power source. Specifically, the PC LED goes off when the PC stops, is lit red when the PC is in standby, and is lit green when the PC is ON.

The operation panel 7 includes a mode change button 7a, an input change button 7b, a channel button 7c, and a volume adjustment button 7d. The mode change button 7a switches between the TV tuner 11 and the PC 14. The input change button 7b switches between a tuner unit 112, video, and S video. The channel button 7c selects channels of the tuner unit 112. The volume adjustment button 7d adjusts the sound.

The remote controller 8 is a remote control operation panel that makes use of infrared rays, and has buttons for mode change, input change, channel selection, volume control, and so forth. The remote controller light receiving unit 8a is an infrared ray sensor that receives control signals as infrared rays from the remote controller 8, and sends the control signals to the TV tuner 11. The input device 9 is an input device of the PC 14 connected with the image processing device 10 via radio, for example, and includes a keyboard, a mouse, and the like. The input device receiving unit 9a can be a radio interface unit that receives control signals as radio waves from the input device 9, and sends the control signals to the PC 14.

The monitor 16 is an image display device that displays video data input from the TV tuner 11, and has an LCD (Liquid Crystal Display) panel 161, and a back light 162. The LCD panel 161 is an image display panel that uses a liquid crystal display element. The back light 162 is a light source that illuminates the LCD panel 161 from the back, using a cold cathode tube or a white light emitting diode. The cooling fan 18 cools the heat generated in the TV tuner 11 when the TV tuner 11 is turned ON. A PDP or CRT display could be used instead.

The TV tuner 11 receives and selects broadcast signals, and converts selected broadcast signals into TV image signals. The TV tuner 11 is an expansion card that may be built in the PC 14, and includes a TV antenna 111, a tuner unit 112, an A/D converter 113, an RGB converter 114, a changeover switch 115, an MPEG (Moving Picture Experts Group) encoder 116, a bridge circuit 117, a TV tuner power circuit 121, a microcomputer controlling unit 122, a ROM memory unit 123, and a monitor power circuit 126.

The TV antenna 111 receives broadcast signals, and specifically, is manufactured by Yagi Antenna Co., Ltd. The tuner unit 112 selects received broadcast signals based on frequency, and amplifies the selected broadcast signals. The A/D converter 113 converts analog broadcasting signals into video data of NTSC (National Television System Committee) format. The RGB converting circuit 114 converts video data of NTSC format into video data of RGB format. The changeover switch 115 is an image data changeover switch that changes over video data converted by the RGB converting circuit 114 and video data input from the PC 14 and sends out the video data to the monitor 16.

The MPEG encoder 116 carries out image compression of the video data of NTSC format converted by the A/D converter 113. The bridge circuit 117 interfaces with a PCI bus of the PC 14, and has a power condition identification information memory unit 117a. The power condition identification information memory unit 117a stores as power condition identification information, the information to identify the power condition of the PC 14.

The TV tuner power circuit 121 is independent of the power source of the PC 14, converts AC power of 100V into DC power of 3.3V and 5V, and thereby supplies electric power to various circuits. As shown in Fig. 2, broken lines extending from the TV tuner power circuit 121 to the various circuits represent power lines that supply electric power.

The microcomputer controlling unit 122 is always supplied electric power by the power source of the PC 14, and controls the entire TV tuner 11. The microcomputer controlling unit 122 includes a condition monitoring unit 122a, and an image processing controlling unit 122b. As shown in Fig. 2, chain lines extending from the microcomputer controlling unit 122 to the various circuits are control lines that send and receive control signals or condition data. A user operates the operation panel 7 and the remote controller 8 to give a request or an instruction to the microcomputer controlling unit 122.

The condition monitoring unit 122a monitors power and display and other conditions concerning the PC 14 and the monitor 16. In addition, the condition monitoring unit 122a monitors at least one of the power conditions of the PC 14, the power conditions of the monitor 16, the switching signals of the PC 14 and the monitor 16, the operating signals of the input unit of the PC 14, and the start of a timer of the PC 14. Therefore, it is possible to display TV images speedily using signals from the TV tuner power button 1, the PC power button 3, the changeover button of the TV tuner and the PC, the keyboard, the mouse, and the timer.

The condition monitoring unit 122a monitors any one of the power terminal of the PC 14 or the monitor 16 and the connection terminal with the PC 14 and the monitor 16, or both. Therefore, the condition monitoring unit 122a easily monitors the power and display and other conditions concerning the PC 14 and the monitor 16.

The condition monitoring unit 122a monitors the power conditions of the PC 14 based on the power condition identification information that is identified by a device driver of the TV tuner 11. As mentioned above, the conditions of the PC 14 are written by the PC 14, and the condition monitoring unit 122a monitors the conditions stored in the power condition identification information memory unit 117a. Therefore, the condition monitoring unit 122a may easily monitor the power conditions of the PC.

The image processing controlling unit 122b determines the output of images that are output from the tuner unit 112, based on the conditions of the PC 14 or the monitor 16. Therefore, the image processing controlling unit 122b displays TV images speedily, based on the power and display and other conditions concerning the PC or the monitor.

The image processing controlling unit 122b changes over PC images and TV images from the PC 14 or the monitor 16 based on the power and display and other conditions. Therefore, the image processing controlling unit 122b displays TV images speedily, based on the power and display and other conditions concerning the PC 14 or the monitor 16.

If the condition monitoring unit 122a detects that the PC 14 has been switched ON from an OFF state or its temporary stop condition, the image processing controlling unit 122b provides control to display a start screen with a PC image of the PC 14, onto the monitor 16. Thus, the image processing controlling unit 122b carries out the control without disturbing users who are watching TV.

On detecting the input of TV image signals, the image processing controlling unit 122b sends a start signal via the PCI bus of the PC 14, and starts the PC 14. Thus, the image processing controlling unit 122b starts the PC14 without causing any trouble to a user.

The ROM memory unit 123 is an electrically rewritable flash memory, that is, an EEPROM (Electrically Erasable and Programmable Read Only Memory), and includes a setting channel memory unit 123a. The setting channel memory unit 123a stores setting channels of the tuner unit 112.

The monitor power circuit 126 is independent of the power source of the TV tuner 11 and the power source of the PC 14, and converts AC power of 100V into DC power of 3.3V and 5V, and thereby supplies electric power to the LCD panel 161 of the monitor 16.

The image processing controlling unit 122b controls the cooling fan 18 while the TV tuner 11 is in use. Namely, when the TV tuner 11 is turned ON, the image processing controlling unit 122b turns the cooling fan 18 ON, on the other hand, when the TV tuner 11 is turned OFF, the image processing controlling unit 122b turns the cooling fan 18 OFF. Thus, the image processing controlling unit 122b cools down heat that the TV tuner 11 generates, and keeps temperatures of the various circuits of the TV tuner 11 within an appropriate temperature range.

The PC 14 includes a bridge circuit 141, an HDD (hard disk drive) memory unit 142, a video output unit 143, an input/output I/F unit 144, a ROM (Read Only Memory) memory unit 145, a RAM (Random Access Memory) memory unit 146, a bus 147, a CPU (central processing unit) controlling unit 148, and a PC power circuit 151.

The bridge circuit 141 interfaces with the PCI bus of the PC 14, and transfers the video data of NTSC format that is image compressed by the MPEG encoder 116 to the PCI bus of the PC 14 at a high speed. The HDD memory unit 142 stores the video data of NTSC that is image compressed, and includes an HDD driving unit 142a, and a compression video data memory unit 142b.

The HDD driving unit 142a is always supplied electric power from the power source of the PC 14, and thereby drives the HDD memory unit 142. In addition, the HDD driving unit 142a records video data that is controlled to be output to the PC 14 by the image processing controlling unit 122b. The compression video data memory unit 142b stores video data of NTSC format that is image compressed by MPEG, i.e. moving-image data (animated images).

As mentioned above, the HDD driving unit 142a is always supplied electric power from the power source of the PC 14, and thereby drives the HDD memory unit 142. Therefore, the HDD driving unit 142a records into the compression video data memory unit 142b, the TV image signals that are controlled by the image processing controlling unit 122b to be output to the PC 14.

Video data of image compressed NTSC format, stored in the compression video data memory unit 142b, are compression decoded by a compression decoding program. The video output unit 143 converts video signals decoded by the compression decoding program into video data of RGB format, and outputs the video data to the TV tuner 11.

The input/output I/F unit 144 inputs and outputs data from the input device 9 via the input device receiving unit 9a, and may be an interface such as SCSI (Small Computer System Interface) or USB (Universal Serial Bus).

The ROM memory unit 145 is a read only memory unit, and includes a device driver memory unit 145a and a compression decoding program memory unit 145b. The device driver memory unit 145a stores a device driver of the TV tuner 11. The device driver of the TV tuner 11 is executed by the CPU controlling unit 148, and stores the power condition identification information that identifies the power conditions of the PC 14, into the power condition identification information memory unit 117a of the bridge circuit 117 in the TV tuner 11. In addition, the device driver of the TV tuner 11 transfers setting channels from the PC 14 to the setting channel memory unit 123a of the ROM memory unit 123. The compression decoding program memory unit 145b stores a compression decoding program that compression decodes video data of image compressed NTSC format stored in the HDD memory unit 142.

The RAM memory unit 146 stores data and the like. The bus 147 is a signal line that transfers data among the bridge circuit 141, the HDD memory unit 142, the video output unit 143, the input/output I/F unit 144, the ROM memory unit 145, the RAM memory unit 146, and the CPU controlling unit 148. Further, the CPU controlling unit 148 is a main controlling unit that controls the PC 14 entirely, and performs the control, calculation process, and control of data.

PC power circuit 151 is a power source of the PC 14, and converts AC power of 100V into DC power of 3.3V, 5V, and up to 12V, and thereby supplies electric power to various circuits. The PC power circuit 151 supplies electric power not only to the various circuits of the PC 14, but also to the microcomputer controlling unit 122 of the TV tuner 11 and to the back light 162 of the monitor 16. As shown in Fig. 2, broken lines extending from the PC power circuit 151 to the various circuits show power lines that supply electric power.

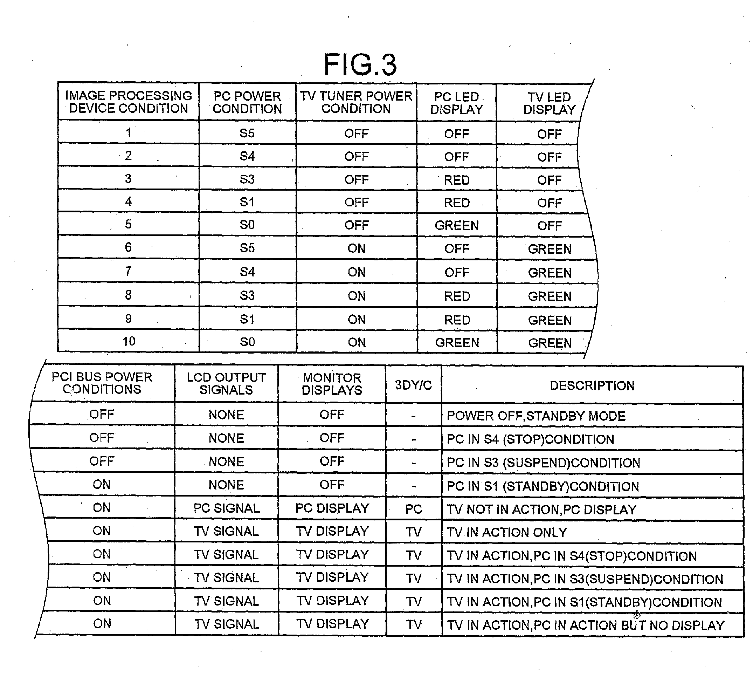

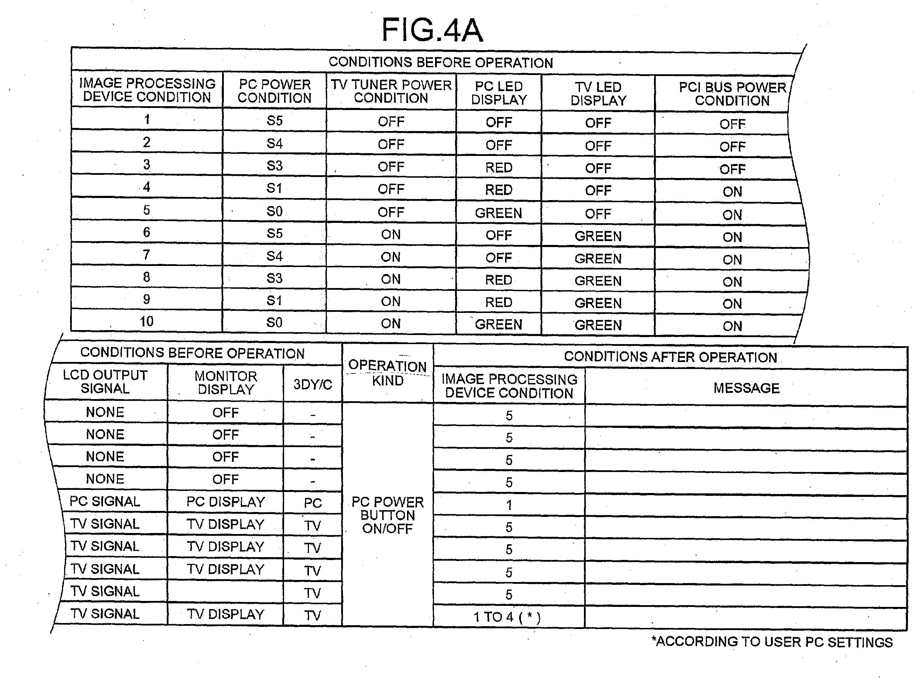

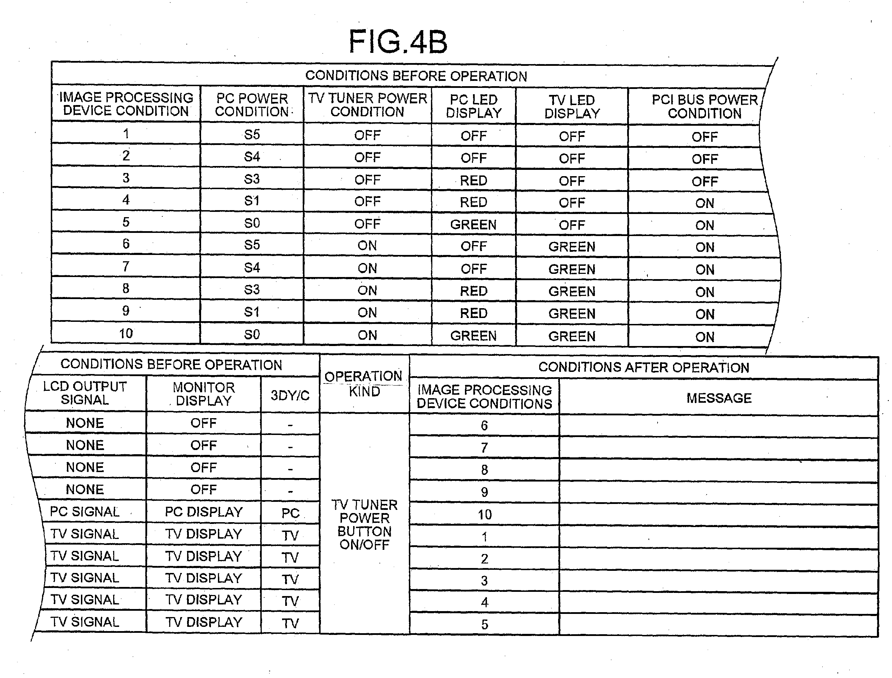

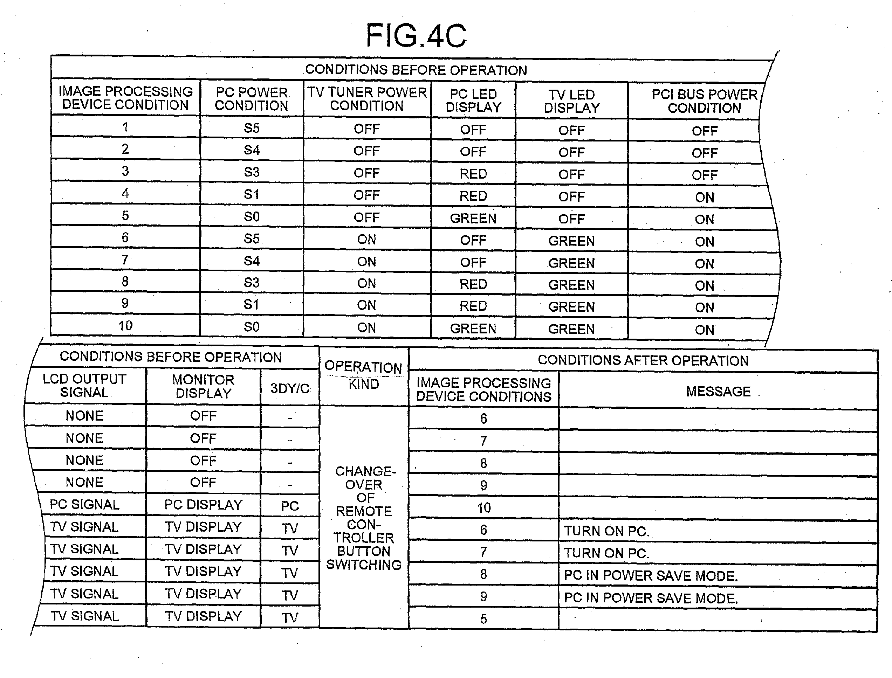

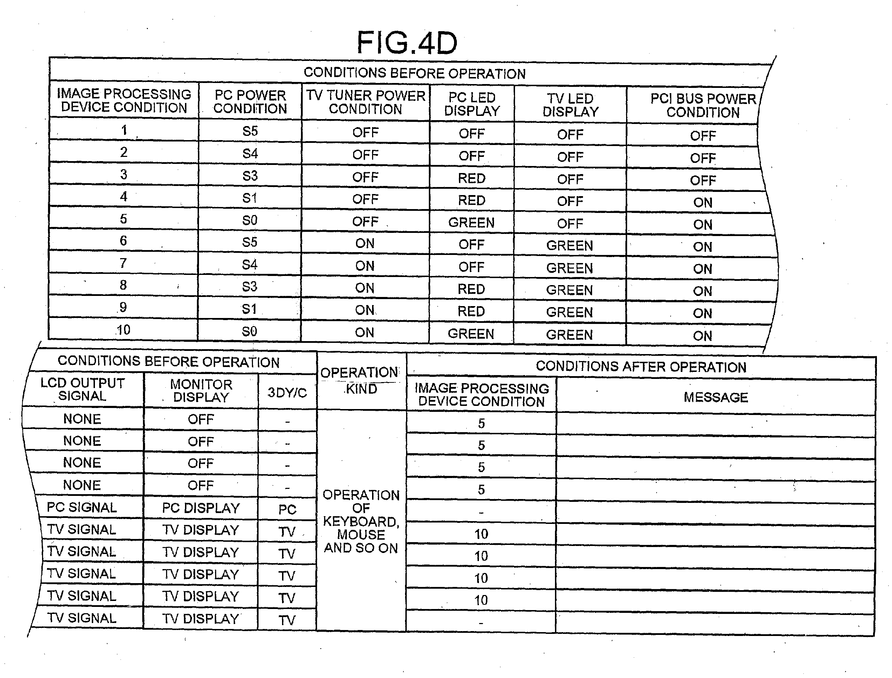

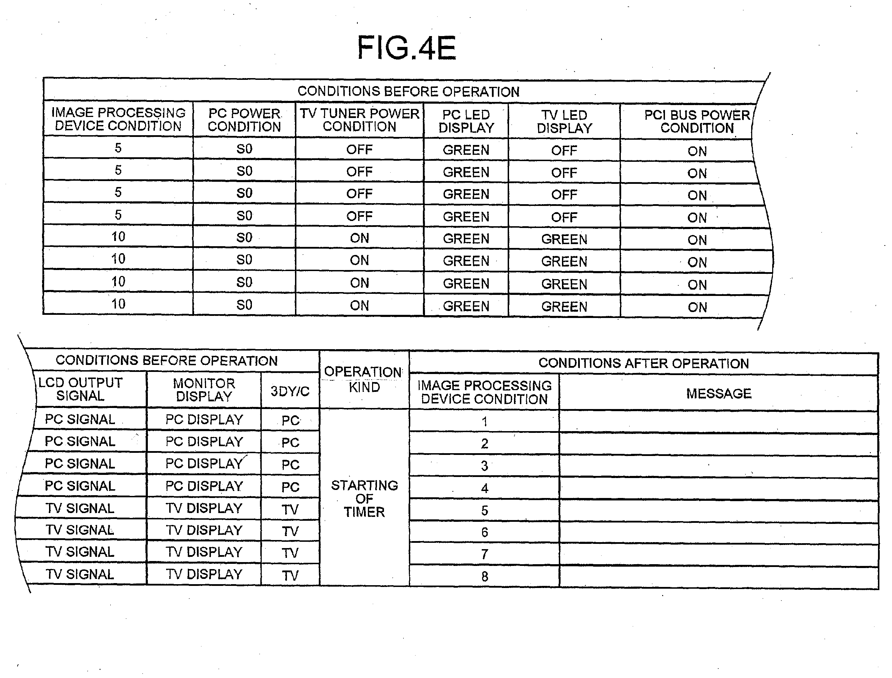

The conditions/control concerning power/images of the image processing device 10 shown in Fig. 2, is explained hereinafter with reference to Fig. 3 and Fig. 4A to Fig. 4E. Fig. 3 illustrates conditions related to the power source and images of the image processing device 10 shown in Fig. 2. Fig. 4A to Fig. 4E illustrate control conditions for the power source and images of the image processing device 10 shown in Fig. 2.

As shown in Fig. 3, the conditions related to the power source and images of the image processing device 10 shown in Fig. 2 are classified into 10 kinds, and are numbered 1 to 10. Further, the conditions 1 to 10 of the image processing device 10 are identified respectively by PC power condition, TV tuner 11 power condition, PC LED (light emitting diode) display, TV LED display, PCI bus power condition, LCD output signal, monitor display, and 3DY/C. The PC power condition includes conditions S0 to S5, and S0 indicates ON, S1 shows PC power excluding PCI bus power in standby mode, S3 indicates standby mode, S4/S5 indicates stop or temporary stop. Temporary stop is the condition where the condition just before the PC is shut off is saved into memory, the PC shifts to power save mode and the PC stops. The next time the PC is turned on, the condition just before being turned off is displayed. The action conditions of the TV tuner 11 include 2 kinds, that is, ON and OFF.

The PC LED display shows the condition of the PC 14, and green indicates S0, red indicates S1, S3, and not lit indicates S4/S5. The TV LED display shows the condition of the TV tuner 11, and green indicates ON , and not lit indicates OFF.

The microcomputer controlling unit 122 judges the PC power conditions, by monitoring the PC LED display (PC power source) and the PCI bus power source as mentioned above. The PCI bus power source is the power source of the bridge circuit 141 that is the interface circuit of the PCI bus , that is, the power source of the bridge circuit 117 of the TV tuner 11. As explained above, the microcomputer controlling unit 122 judges the PC power conditions by monitoring the PC LED display and the PCI bus power source. Therefore, the microcomputer controlling unit 122 can easily identify the conditions of the PC power source.

The LCD output signal shows image signals that are output from the changeover switch 115 to the monitor 16, and the monitor 16 displays images on the monitor 16. Consequently, as shown in Fig. 3, in the conditions 1 to 4 of the image processing device 10, there is no LCD output signal, and the monitor 16 is OFF. Similarly, in the condition 5 of the image processing device 10, image signals are output from the PC 14, and the monitor 16 displays PC images of the PC 14. In the conditions 6 to 10 of the image processing device 10, image signals are output from the TV tuner 11, and the monitor 16 displays TV images of the TV tuner 11.

In the control figures shown in Fig. 4A to Fig. 4E, the columns indicate conditions before operation, operation type, and conditions after operation. The rows indicate action conditions 1 to 10 of the image processing device 10. The conditions before operation and the conditions after operation are defined by the conditions 1 to 10 of the image processing device 10 shown in Fig. 3. The operation type includes ON/OFF of the PC power button, ON/OFF of the TV tuner power button 1, ON/OFF of the changeover button of the remote controller 8, operations of the input device 9 such as a keyboard or a mouse, and the start of a timer. With these operations as control signals, the microcomputer controlling unit 122 of the image processing device 10 controls the power source and images from the conditions before operation into the conditions after operation.

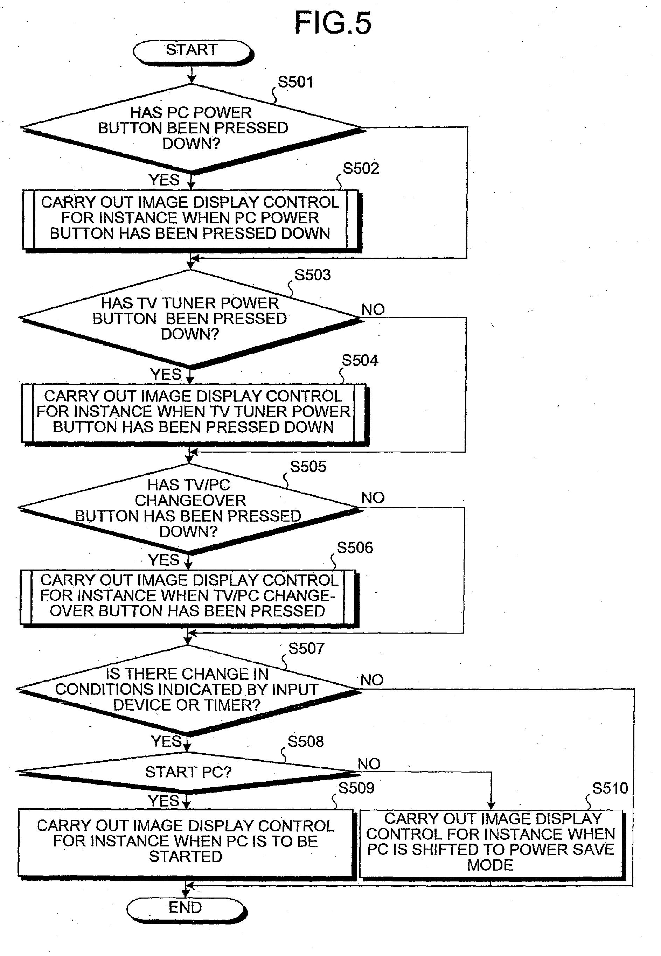

The image display control procedures of the image processing device 10 shown in Fig. 2 are explained next. Fig. 5 is a flowchart of the image display control procedure of the image processing device 10. The condition monitoring unit 122a detects whether the PC power button 3 has been pressed down (step S501). If the PC power button 3 has been pressed down (Yes at step S501), the image processing controlling unit 122b carries out image display control for the instance when the PC power button 3 has been pressed down (step S502).

On the other hand, if the PC power button 3 has not been pressed down (No at step S501), the image processing controlling unit 122b proceeds to step S503. Then, the condition monitoring unit 122a detects whether the TV tuner power button 1 has been pressed down (step S503). If the TV tuner power button 1 has been pressed down (Yes at step S503), the image processing controlling unit 122b carries out image display control for the instance when the TV tuner power button 1 has been pressed down (step S504).

On the other hand, if the TV tuner power button 1 has not been pressed down (No at step S503), the image processing controlling unit 122b proceeds to step S505. Then the condition monitoring unit 122a detects whether the TV/PC changeover button has been pressed down (step S505). If the TV/PC changeover button has been pressed down (Yes at step S505), the image processing controlling unit 122b carries out image display control for the instance when the TV/PC changeover button has been pressed down (step S506).

On the other hand, if the TV/PC changeover button has not been pressed down (No at step S505), the image processing controlling unit 122b proceeds to step S507. Then the condition monitoring unit 122a detects whether there are changes in conditions by the input device 9 or the timer (step S507) to detect if a change in conditions is indicated by the input device 9 or the timer. If no change in the conditions is indicated by the input device 9 or the timer (No at step S507), the image processing controlling unit 122b exits the procedure.

On the other hand, if changes in the conditions are indicated by the input device 9 or the timer (Yes at step S507), the condition monitoring unit 122a further detects whether the changes in the conditions indicate that the PC 14 be started (step S508). If the PC 14 is to be started (Yes at step S508), the image processing controlling unit 122b carries out image display control for the instance when the PC is to be started (step S509). On the other hand, if the changes in the conditions by the input device 9 or the timer indicate that the PC 14 shift to power save mode (step S508 negative), the image processing controlling unit 122b carries out image display control for the instance when the PC is to be shifted to power save mode (step S510).

According to the procedure explained above, the condition monitoring unit 122a monitors the power and display and other conditions related to the PC 14 and the monitor 16, while the image processing controlling unit 122b changes over PC images and TV images based on the conditions.

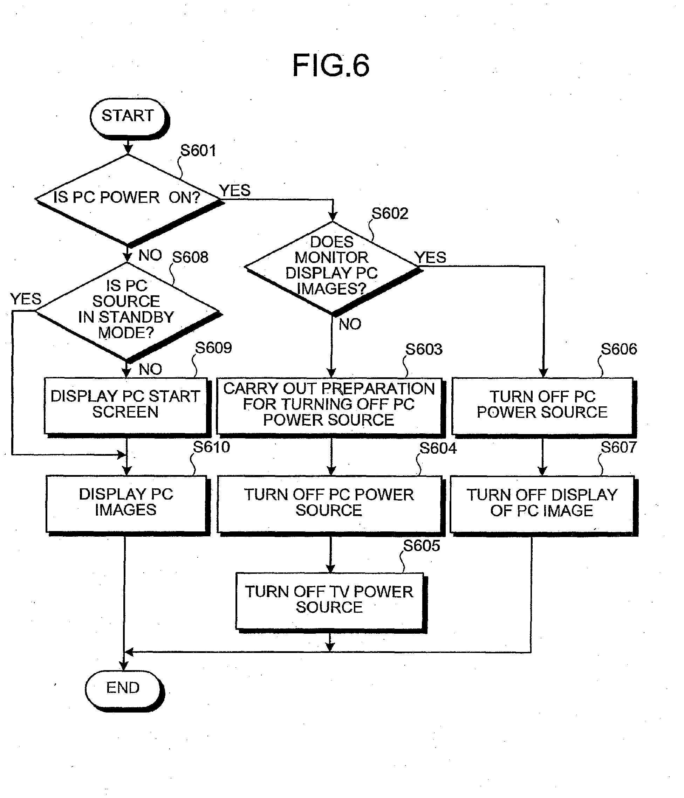

The image display control procedure for the instance when the PC power button 3 has been pressed down (step S502 shown in Fig. 5) is explained in detail next. Fig. 6 is a flowchart of the image display control procedure for the instance when the PC power button 3 has been pressed down. The condition monitoring unit 122a detects whether the PC power is ON (step S601). If the PC power is ON (Yes at step S601), the condition monitoring unit 122a further detects whether the monitor 16 displays PC images (step S602).

If the monitor 16 displays TV images (No at step S602), the image processing controlling unit 122b changes the display of TV images into the display of PC images once, and carries out preparation for turning OFF the PC power source by saving files created by a user or so (step S603), thereafter turns OFF the PC power source (step S604), and then turns OFF the TV power source (step S605). The TV power source may be left ON. However, it is turned OFF here, on assumption that a user leaves the system. On the other hand, if the monitor 16 displays PC images (Yes at step S602), the image processing controlling unit 122b turns OFF the PC power source (step S606), and then turns OFF the display of PC images (step S607).

However, if the PC power source is not ON (No at step S601), the condition monitoring unit 122a further detects whether the PC power source is in standby mode (step S608). If the PC power source is OFF (No at step S608), the image processing controlling unit 122b displays the PC start screen (step S609), and displays PC images (step S610). On the other hand, if the PC power source is in standby mode (Yes at step S608), the image processing controlling unit 122b displays PC images (step S610).

According to the procedure explained above, the image processing controlling unit 122b controls the image display for the instance when the PC power button 3 is pressed down based on the power and display and other conditions concerning the PC 14 and the monitor 16.

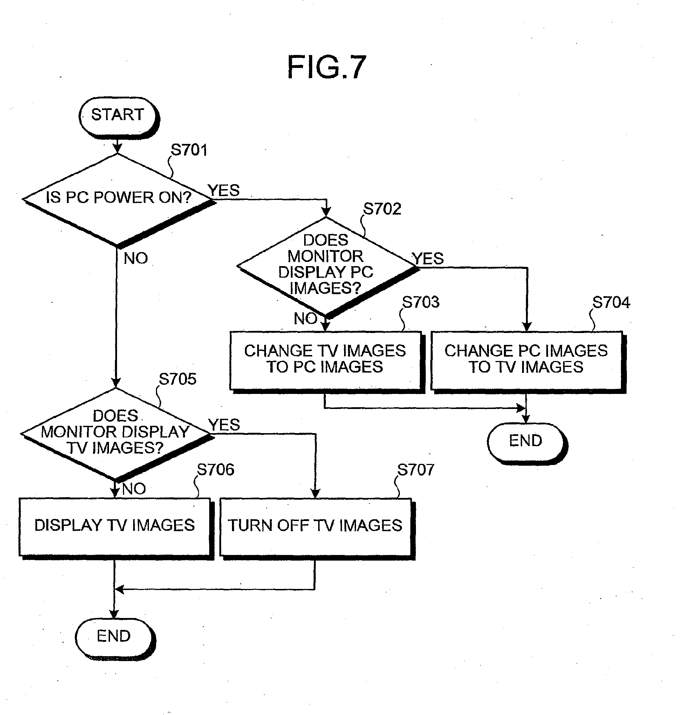

The image display control procedure in the case when the TV tuner power button 1 is pressed down (step S504 shown in Fig. 5) is explained in detail next. Fig. 7 is a flowchart of the image display control procedure for the instance when the TV tuner power button 1 has been pressed down.

The condition monitoring unit 122a detects whether the PC power is ON (step S701). If the PC power is ON (Yes at step S701), the condition monitoring unit 122a further detects whether the monitor 16 displays PC images (step S702). If the monitor 16 displays TV images (No at step S702), the image processing controlling unit 122b changes the display of TV images into the display of PC images (step S703). On the other hand, if the monitor 16 displays PC images (step S702 positive), the image processing controlling unit 122b changes PC images into TV images (step S704).

However, if the PC power source is not ON (No at step S701), the condition monitoring unit 122a further detects whether the monitor 16 displays TV images (step S705). If the monitor 16 does not display TV images (No at step S705), the image processing controlling unit 122b displays TV images (step S706). On the other hand, if the monitor 16 displays TV images (Yes at step S705), the image processing controlling unit 122b turns OFF TV images (step S707).

According to the procedure explained above, the image processing controlling unit 122b controls the image display for the instance when the TV tuner power button 1 is pressed down, based on the power and display and other conditions concerning the PC 14 and the monitor 16.

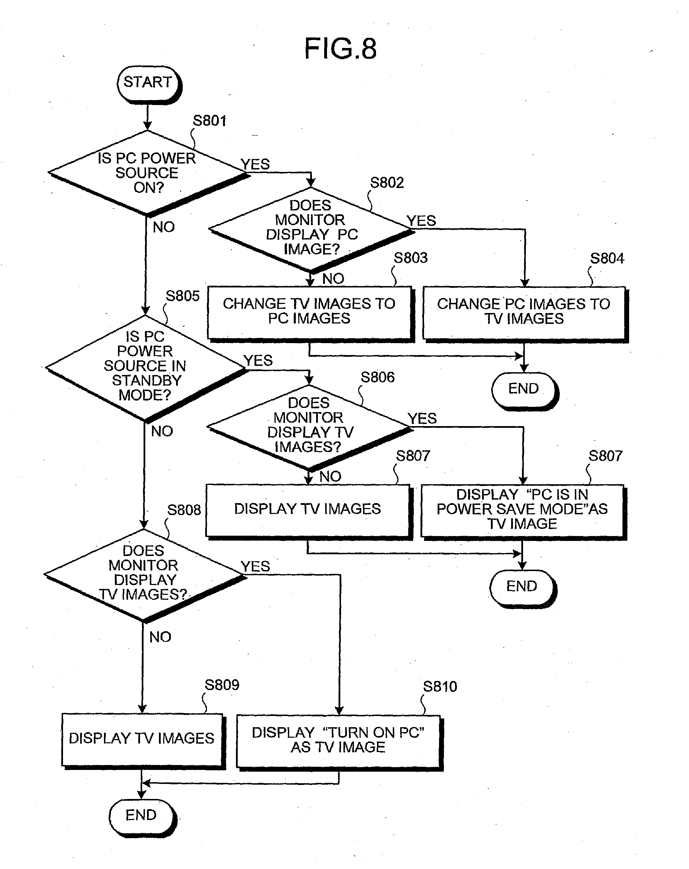

The image display control procedure for the instance when the TV/PC changeover button has been pressed down (step S506 shown in Fig. 5) is explained in detail next. Fig. 8 is a flowchart of the image display control procedure for the instance when the TV/PC changeover button has been pressed down.

The condition monitoring unit 122a detects whether the PC power source is ON (step S801). If the PC power source is ON (Yes at step S801), the condition monitoring unit 122a further detects whether the monitor 16 displays PC images (step S802).

If the monitor 16 displays TV images (No at step S802), the image processing controlling unit 122b changes TV images into PC images (step S803). On the other hand, if the monitor 16 displays PC images (Yes at step S802), the image processing controlling unit 122b changes PC images into TV images (step S804).

On the contrary, if the PC power source is not ON (No at step S801), the condition monitoring unit 122a further detects whether the PC power source is in standby mode (step S805). If the PC power source is in standby mode (Yes at step S805), the condition monitoring unit 122a further detects whether the monitor 16 displays TV images (step S806).

If the monitor 16 does not display TV images (No at step S806), the image processing controlling unit 122b displays TV images (step S807). On the other hand, if the monitor 16 displays TV images (Yes at step S806), the image processing controlling unit 122b displays an OSD (On Screen Display) showing "PC is in power save mode" as the TV image (step S807).

On the contrary, when the PC power source is not in standby mode (No at step S805), the condition monitoring unit 122a further detects whether the monitor 16 displays TV images (step S808). If the monitor 16 does not display TV images (No at step S808), the image processing controlling unit 122b displays TV images (step S809). On the other hand, if the monitor 16 displays TV images (Yes at step S808), the image processing controlling unit 122b displays an OSD showing "Turn on the PC" as the TV image (step S810).

According to the procedure explained above, the image processing controlling unit 122b controls the image display in the instance when the TV/PC changeover button is pressed down, based on the power and display and other conditions concerning the PC 14 and the monitor 16.

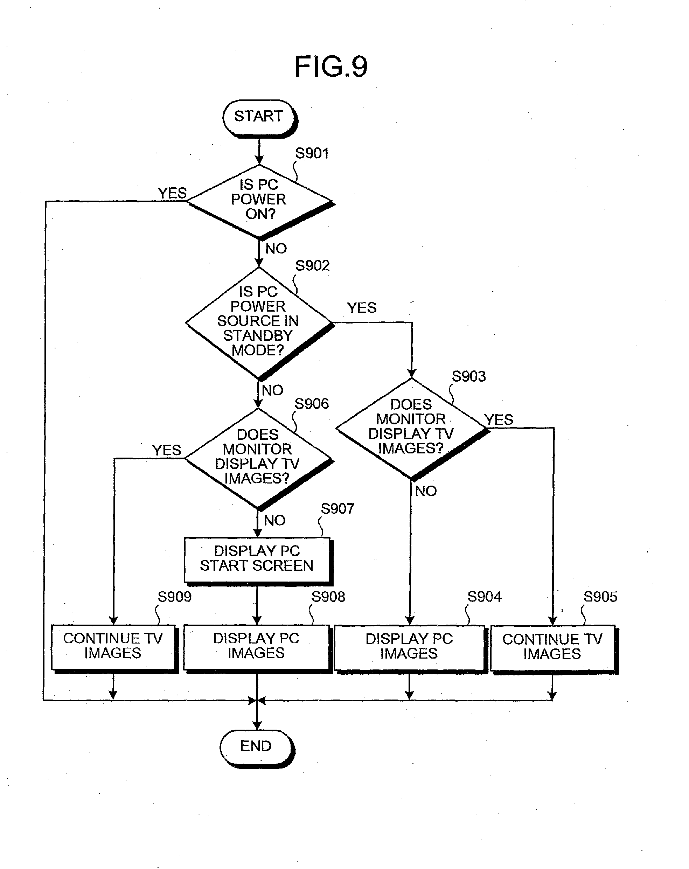

The image display control procedure for the instance when the input device 9 and the timer start the PC 14 (step S509 shown in Fig. 5) is explained in detail next. Fig. 9 is a flowchart of the image display control procedure for the instance when the input device 9 and the timer start the PC.

The condition monitoring unit 122a detects whether the PC power is ON (step S901). If the PC power source is ON (Yes at step S901), the image processing controlling unit 122b exits the procedure.

On the contrary, if the PC power is OFF (No at step S901), the condition monitoring unit 122a further detects whether the PC power source is in standby mode (step S902). If the PC power source is in standby mode (Yes at step S902), the condition monitoring unit 122a further detects whether the monitor 16 displays TV images (step S903).

If the monitor 16 does not display TV images (No at step S903), the image processing controlling unit 122b displays PC images (step S904). On the other hand, if the monitor 16 displays TV images (Yes at step S903), the image processing controlling unit 122b continues to display TV images (step S905). At this moment, at a request from a user, TV images may be recorded into the HDD memory unit 142.

On the contrary, if the PC power source is not in standby mode (No at step S902), the condition monitoring unit 122a further detects whether the monitor 16 displays TV images (step S906). If the monitor 16 does not display TV images (No at step S906), the image processing controlling unit 122b displays the PC start screen (step S907), and displays PC images (step S908). On the other hand, if the monitor 16 displays TV images (Yes at step S906), the image processing controlling unit 122b continues to display TV images (step S909). At this moment, at a request from a user, TV images may be recorded into the HDD memory unit 142.

According to the procedure explained above, the image processing controlling unit 122b controls the image display for the instance when the input device 9 and the timer start the PC 14, based on the power and display and other conditions concerning the PC 14 and the monitor 16.

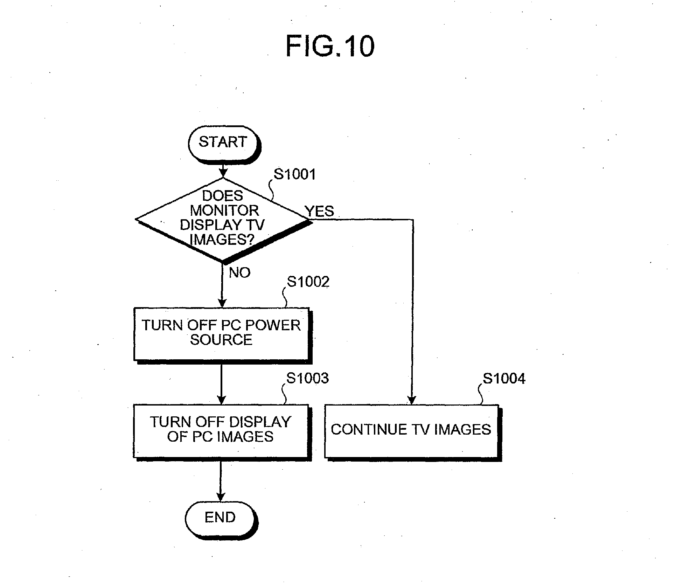

The image display control procedure for the instance when the input device 9 and the timer shift the PC 14 to power save mode (step S510 shown in Fig. 5) is explained in detail next. Fig. 10 is a flowchart of the image display control procedure for the instance when the input device 9 and the timer shift the PC 14 to power save mode. When the PC 14 is shifted to power save mode, the PC power source is always in its ON condition.

The condition monitoring unit 122a detects whether the monitor 16 displays TV images (step S1001). If the monitor 16 does not display TV images (No at step S1001), the image processing controlling unit 122b turns OFF the PC power source (step S1002), and turns OFF the display of PC images (step S1003). On the other hand, if the monitor 16 displays TV images (Yes at step S1002), the image processing controlling unit 122b continues the TV images (step S1004).

According to the procedure explained above, the image processing controlling unit 122b controls the image display for the instance when the PC 14 is shifted to power save mode by the input device 9 and the timer, based on the power and display and other conditions concerning the PC 14 and the monitor 16.

Thus, in the first embodiment, the condition monitoring unit 122a monitors the power and display and other conditions concerning the PC 14 and the monitor 16, while the TV tuner 11 outputs images, without any influence by the power and display and other conditions concerning the PC 14 and the monitor 16. Therefore, it is possible to display TV images speedily by monitoring the power and display and other conditions concerning the PC 14 and the monitor 16.

Further, the condition monitoring unit 122a monitors at least one of the power conditions of the PC 14 or the monitor 16, the switching signals of the PC 14 and the monitor 16, the operating signals of the input unit of the PC 14, and the start of a timer of the PC 14. Therefore, it is possible to display TV images speedily based on signals from the TV tuner power button, the PC power button, the changeover button for switching between the TV tuner power source and the PC power source, the keyboard, the mouse, and the timer.

Furthermore, the image processing controlling unit 122b determines the output of images that are output, based on the power and display and other conditions concerning the PC 14 and the monitor 16. Therefore, it is possible to display TV images speedily based on the power and display and other conditions concerning the PC14 or the monitor 16.

Moreover, PC images from the PC 14 and TV images are changed over based on the power and display and other conditions concerning the PC 14 or the monitor 16. Therefore, it is possible to change over TV images and PC images based on the power and display and other conditions.

Furthermore, when it is detected that the PC 14 is switched ON from OFF or its temporary stop condition into ON, the image processing controlling unit 122b provides control to display the start screen as a PC image of the PC 14. Therefore, it is possible to carry out the control without disturbing users who are watching TV.

Moreover, the PC 14 carries out the main control over the image processing device 10, and outputs PC images, while the TV tuner 11 receives images without any influence by the conditions of the PC 14 and the monitor 16. The condition monitoring unit 122a monitors the conditions of the PC 14 and the monitor 16, and the image processing controlling unit 122b outputs images. PC images and TV images are changed over based on the conditions. Therefore, it is possible to change over PC images and TV images by monitoring the power and display and other conditions concerning the PC 14 and the monitor 16.

Furthermore, the conditions of the PC 14 and the monitor 16 are monitored, and PC images from the PC 14 and TV images from the tuner unit 112 are changed over based on the conditions. Therefore, it is possible to change over PC images and TV images by monitoring the power and display and other conditions concerning the PC 14 and the monitor 16.

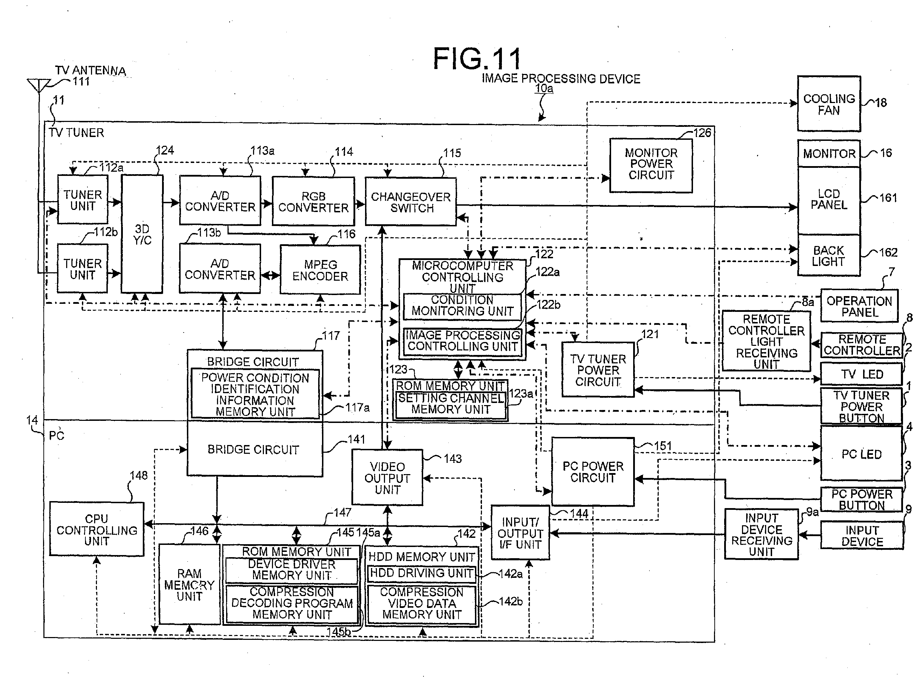

As a second embodiment, simultaneously displaying and recording TV image signals received by two tuner units is explained below. The structure of an image processing device 10a according to the second embodiment is explained first. Fig. 11 is a functional block diagram of an image processing device 10a according to the second embodiment. The difference from the functional block diagram in the first embodiment is that the image processing device 10a includes tuner units 112a and 112b, a 3DY/C 124, and A/D converters 113a and 113b. Explanation of the contents identical to those in the functional block diagram of the first embodiment is omitted, and only different points are explained hereinafter.

Each of the tuner units 112a and 112b is a circuit that selects received broadcast signals by frequency, and amplifies the selected broadcast signals. Each of the A/D converters 113a and 113b is a circuit that converts analog broadcast signals into video data of NTSC format. The 3DY/C 124 is a 3-dimensional brightness / color signal separator that separates brightness signals and color signals, and is an image compensating circuit that separates brightness signals and color signals by use of the difference in data with time in addition to 2-dimensional space in horizontal and vertical directions, and prevents bleeding between colors and the like. In addition, the 3DY/C 124 changes over video data input from the tuner units 112a and 112b and outputs the video data to the A/D converters 113a and 113b.

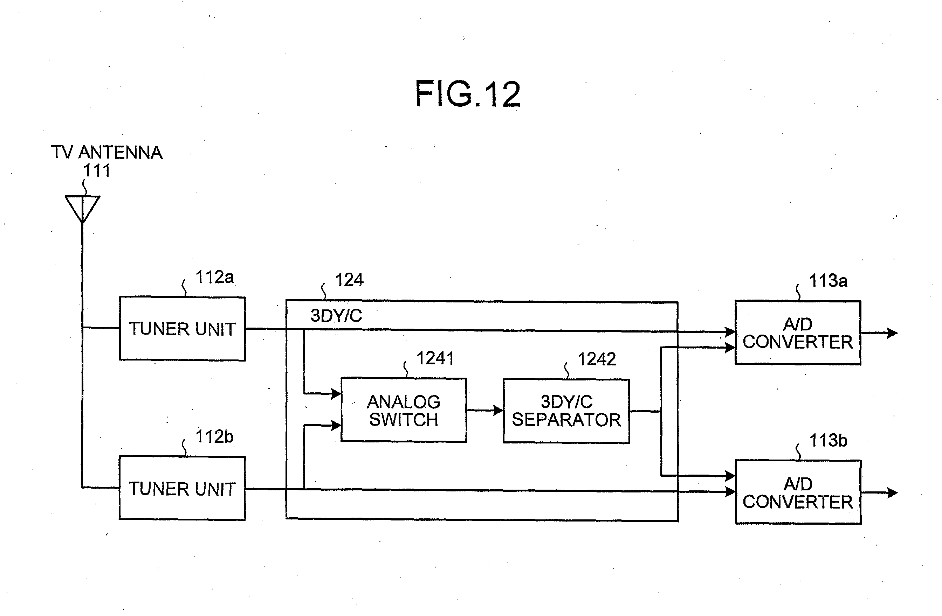

The structure of the 3DY/C 124 shown in Fig. 11 is explained in detail with reference to Fig. 12. Fig. 12 is a functional block diagram of the 3DY/C 124 shown in Fig. 11. The 3DY/C 124 includes an analog switch 1241 and a 3DY/C separator 1242. The analog switch 1241 switches between input signals from the tuner unit 112a and those from the tuner unit 112b. The 3DY/C separator 1242 separates input signals changed over by the analog switch 1241, into brightness signals and color signals, and outputs the separated brightness signals and color signals to the A/D converters 113a and 113b.

The image processing controlling unit 122b provides control to change over input signals from the tuner unit 112a and those from the tuner unit 112b using the analog switch 1241. Thus, the image processing controlling unit 122b changes over the TV image signals converted from broadcast signals selected by the plural tuner units 112a and 112b, and outputs the TV image signals to the monitor 16 or the PC 14. Therefore, it is possible to simultaneously display and record TV image signals.

As described in the second embodiment,, the TV tuner 11 outputs plural images that are received by the tuner units 112a and 112b to the PC 14 and the monitor 16. Therefore, the image processing controlling unit 122b provides control to switch the TV image signals converted from broadcast signals selected by the plural tuner units 112a and 112b and output the TV image signals to the monitor 16 or the PC 14.

Further, the 3DY/C 124 compensates images and is shared by the plural tuner units 112a and 112b. Therefore, it is possible to change over broadcast signals received by the tuner units 112a and 112b by use of a single unit of the 3DY/C 124, and to separate broadcasting signals into brightness signals and color signals.

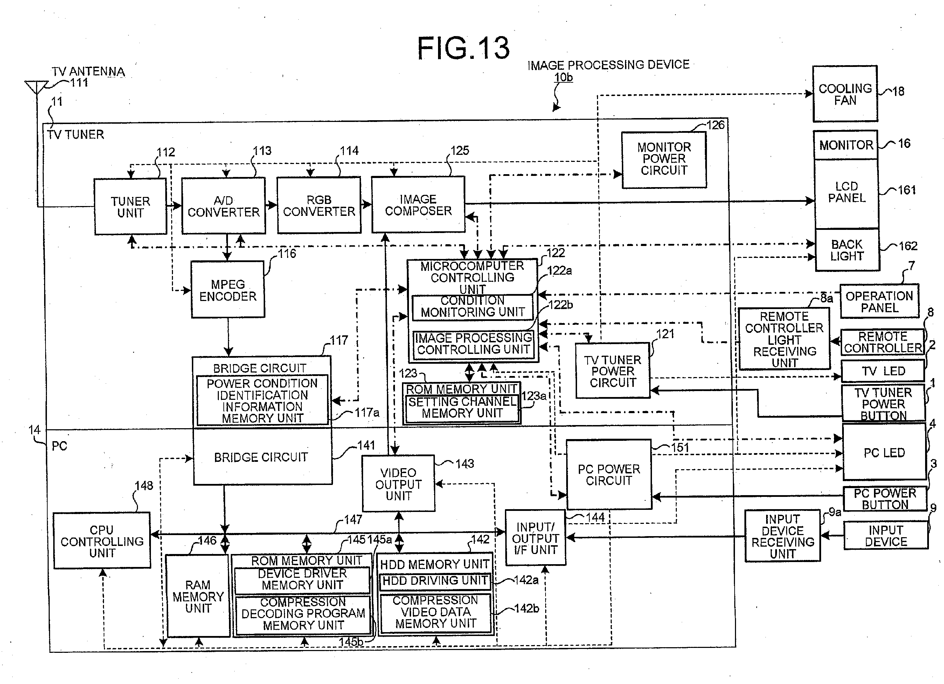

As a third embodiment, composing of TV image signals received by a tuner unit, and of recorded PC image signals is explained below. The structure of an image processing device 10b according to the third embodiment is explained with reference to Fig. 13. Fig. 13 is a functional block diagram of an image processing device 10b according to the third embodiment. The image processing device 10b according to the third embodiment differs from that in the first embodiment in that the image processing device 10b includes an image composer 125 (compositor) for combining two types of image data into a single displayed image (composite image).

The image composer 125 composes TV images output from the tuner unit 112 and PC images output from the PC 14, and composes the images to thereby display TV images on a main screen, and display PC images on a sub screen, or display PC images on the main screen, and display TV images on the sub screen. In this manner, the image processing controlling unit 122b composes TV images and PC images based on the power conditions concerning the PC 14 or the TV tuner 11.

As described in the third embodiment, the image processing controlling unit 122b composes PC images from the PC 14 and TV images based on the power and display and other conditions concerning the PC 14 and the monitor 16. Therefore, it is possible to compose TV images and PC images based on the power and display and other conditions concerning the PC 14 and the monitor 16.

Further, the PC 14 carries out the main control over the image processing device 10b, and outputs PC images, while the TV tuner 11 receives images without any influence by the conditions of the PC 14 and the monitor 16. The condition monitoring unit 122a monitors the conditions of the PC 14 and the monitor 16, and the image processing controlling unit 122b outputs images. PC images and TV images are changed over based on the conditions. Therefore, it is possible to change over PC images and TV images by monitoring the power and display and other conditions concerning the PC 14 and the monitor 16.

Furthermore, the image processing controlling unit 122b composes PC image signals and TV image signals, and displays the image signals simultaneously. As an example of composition, control signals are received and TV image signals are displayed on the main screen, while PC image signals are displayed on the sub screen, or PC image signals are displayed on the main screen, while TV image signals are displayed on the sub screen. Therefore, TV image signals and PC image signals are displayed simultaneously.

The embodiments of the present invention have been explained heretofore, while, the present invention may be embodied in other specific forms than the embodiments described above without departing from the technological characteristics thereof.

Among the respective processes explained in the embodiments, whole or part of a process that has been performed automatically may be performed manually, or, whole or part of a process that has been performed manually may be performed automatically by use of a method known to those skilled in the art. In addition, process procedures, control procedures, concrete names, and information including various data and parameters may be arbitrarily modified, unless otherwise specified.

Further, the respective components of each device illustrated herein are functionally conceptual ones, and it is not necessarily required that they should be physically structured as illustrated herein. Namely, the concrete configuration of distribution and integration of respective devices (image output device and information processing device) is not limited to the one illustrated herein, but whole or part thereof may be configured in functional or physical distribution and integration in an arbitrary unit, according to various loads and service conditions. Furthermore, whole or arbitrary part of each process function to be carried out by each device may be realized by a CPU, and a program that is analyzed and executed by the CPU concerned, or may be realized as hardware by wired logic.

The image output method explained in the embodiments may be realized by executing a program prepared in advance by a computer such as a personal computer or a workstation. This program may be distributed via a network including the Internet. Furthermore, this program may be recorded into a recording medium readable by a computer such as a hard disk, a flexible disk (FD), a CD-ROM, an MO, a DVD and so forth, and may also be read from such a medium to be executed by a computer.

According to one embodiment of the present intention, it is possible to monitor power and display and other conditions concerning a PC or a monitor, and thereby display TV images speedily.

Furthermore, it is possible to display TV images speedily using signals from a TV tuner power button, a PC power button, a switching button of TV tuner power source and PC power source, a keyboard, a mouse, or a timer.

Furthermore, it is possible to easily monitor the conditions of the power source of a PC.

Moreover, it is possible to display TV images speedily, based on power and display and other conditions concerning a PC or a monitor.

Furthermore, it is possible to switch, and/or compose TV images and PC images based on power and display and other conditions concerning a PC or a monitor.

Moreover, it is possible not to disturb users who are watching TV.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. An image output device (11) comprising:
a condition monitoring unit (122a) for monitoring a condition of an output destination device (14, 16);
a power source unit (121) that is not influenced by the condition of the output destination device (14, 16); and
an image output unit (115) for outputting images.

2. The image output device (11) according to claim 1, wherein the condition monitoring unit (122a) monitors at least one condition from among
a state of a power source unit (151, 126) of the output destination device (14, 16),
switching signals of the output destination device (14, 16),
operating signals of an input unit (9a) of the output destination device (14), and
starting of a timer of the output destination device (14).

3. The image output device (11) according to claim 1 or 2, wherein the condition monitoring unit (122a) monitors at least one of
a power terminal of the output destination device (14, 16), and
a connection terminal connected with the output destination device (14, 16).

4. The image output device (11) according to claim 1, 2 or 3, further comprising:
a condition memory/monitoring unit (117a) into which conditions of the output destination device (14) are written by the output destination device (14), and that monitors the conditions written.

5. The image output device (11) according to any preceding claim, further comprising:
an image processing unit (122b) that determines the output of images that are output from the image output unit (115), based on conditions of the output destination device (14, 16).

6. The image output device (11) according to claim 5, wherein based on the conditions of the output destination device (14), the image processing unit (122b) performs at least one function from among
switching between information images from the output destination device (14) and the images that are output from the image output unit (115), and
compositing information images from the output destination device (14) and the images from the image output unit (115).

7. The image output device (11) according to claim 6, wherein
the image processing unit (122b) displays a start screen to display the information image from the output destination device (14), if the condition monitoring unit (122a) detects that the output destination device (14) is switched ON from any one of an OFF state and a temporary stop state.

8. The image output device (11) according to any preceding claim, wherein
the images are animated images that can be obtained from broadcast programs or recording media.

9. The image output device (11) according to claim 8, wherein
the image output unit (115) outputs the animated images as compressed animated image data to the output destination device (14).

10. The image output device (11) according to any preceding claim, further comprising:
at least one image receiving unit (112; 112a, 112b), each for receiving images as an image signal.

11. The image output device (11) according to claim 10, wherein
the image output unit (115) outputs a plurality of the image signals received, to a plurality of different output devices respectively.

12. The image output device (11) according to claim 10 or 11, further comprising:
an image compensating unit (124) that compensates the images, and that is shared by a plurality of the image receiving units (112).

13. The image output device (11) according to claim 10, 11 or 12, further comprising:
a cooling device (18), and
a cooling controlling unit that controls cooling of the cooling device while the at least one image receiving unit (112, 112a, 112b) is in use.

14. The image output device (11) according to any preceding claim, comprising:
an expansion card (11) that may be built in the output destination device (14).

15. An information processing device (10, 10a, 10b) that outputs images to a displaying unit (16), comprising:
a controlling unit (14) for carrying out a main control over the information processing device (10, 10a, 10b), and outputting information images;
a power source unit (121) that is not influenced by a condition of at least one of the controlling unit (14) and a displaying unit (16);
at least one image receiving unit (112, 112a, 112b) for receiving images;
a condition monitoring unit (122a) for monitoring conditions in at least one of the controlling unit (14) and the displaying unit (16);
an image output unit (115) for outputting the images; and
an image processing unit (122b) for performing at least one function from among switching between the information images and the images, and composing the information images and the images, based on the conditions monitored.

16. The image processing device (10, 10a, 10b) according to claim 15, wherein the condition monitoring unit (122a) monitors at least one condition from among
a state of a power source unit (151) of the controlling unit (14),
a state of a power source unit (126) of the displaying unit (16),
switching signals of the controlling unit (14) and the displaying unit (16),
operating signals of an input unit (9a) of the controlling unit (14), and starting of a timer of the controlling unit (14).

17. The image processing device (10, 10a, 10b) according to claim 16, wherein
the image processing unit (122b) displays a start screen to display the information image from the controlling unit (14), if the condition monitoring unit (122a) detects that the controlling unit (14) is switched ON from any one of an OFF state and a temporary stop state.

18. The image processing device (10, 10a, 10b) according to claim 15, 16 or 17, wherein
the images are animated images that can be obtained from broadcast programs or recording media.

19. The image processing device (10, 10a, 10b) according to claim 18, wherein
the image output unit (115) outputs the animated images as compressed animated image data to the controlling unit (14).

20. The image processing device (10, 10a, 10b) according to any of claims 15 to 19, further comprising:
an image compensating unit (124) that compensates the images, and that is shared by a plurality of the image receiving units (112, 112a, 112b).

21. The image processing device (10, 10a, 10b) according to any of claims 15 to 20, further comprising:
a cooling device (18), and
a cooling controlling unit that controls cooling of the cooling device while the at least one image receiving unit (112, 112a, 112b) is in use.

22. The image processing device (10, 10a, 10b) according to any of claims 15 to 21, further comprising:
a control power source unit (151) that supplies electric power to the controlling unit (14).

23. An image output method, comprising steps of:
monitoring conditions of at least one of an information processing device and a display device; and
image processing that includes performing at least one function from among switching between information images from the information processing device and images from a receiving device, and composing the information images from the information processing device and the images from the receiving device, based on the conditions monitored.

24. The image output method according to claim 23, wherein the monitoring step includes monitoring at least one condition from among
a state of a power source unit of the information processing device,
a state of a power source unit of the display device,
switching signals of the information processing device and the display device,
operating signals of an input unit of the information processing device, and
starting of a timer of the information processing device.

25. The image output method according to claim 24, wherein
the image processing step includes displaying a start screen to display the information images from the information processing device, if it is detected at the monitoring step that the information processing device is switched ON from any one of an OFF state and a temporary stop state.

26. The image output method according to any of claims 23 to 25, wherein
the images are animated images that can be obtained from broadcast programs or recording media.

27. A computer program that includes instructions which, when executed by a computer, cause the computer to execute the method according to any of claims 23 to 26.

28. A computer-readable recording medium that stores a computer program according to claim 27.
